# EUROPÄISCHE PATENTSCHRIFT

(11) **EP 4 375 093 B1**
(45) Veröffentlichungstag und Bekanntmachung des Hinweises auf die Patenterteilung: **10.09.2025**
(21) Anmeldenummer: 23207542.4
(22) Anmeldetag: 02.11.2023
(51) Int. Cl.: B60C 23/04

(54) **VERFAHREN ZUM ÜBERTRAGEN VON DATEN VON EINEM REIFENMODUL ZU EINER EXTERNEN EMPFANGSEINHEIT**
METHOD FOR TRANSMITTING DATA FROM A TIRE MODULE TO AN EXTERNAL RECEIVING UNIT
PROCÉDÉ DE TRANSMISSION DE DONNÉES D'UN MODULE DE PNEU À UNE UNITÉ DE RÉCEPTION EXTERNE

(30) Priorität: 25.11.2022 DE 102022212594
(43) Veröffentlichungstag der Anmeldung: 29.05.2024
(73) Patentinhaber: Continental Reifen Deutschland GmbH, 30175 Hannover (DE)
(72) Erfinder: Mohan, Vipin, 30165 Hannover (DE); Nettelmann, Marc, 30165 Hannover (DE); Jaedicke, Jessica, 30165 Hannover (DE); Lehmann, Jörg, 30165 Hannover (DE); James, Akhil, 30165 Hannover (DE); Sahlmüller, Baldo, 30165 Hannover (DE)
(74) Vertreter: Continental Corporation

(56) Entgegenhaltungen:
- EP-A1- 4 088 952
- US-A1- 2002 044 050
- US-A1- 2002 126 005
- US-A1- 2021 181 063

## Beschreibung

Die Erfindung betrifft ein Verfahren zum Übertragen von Daten von einem Reifenmodul zu einer externen Empfangseinheit.

Es ist bekannt, bei Fahrzeugreifen eine Reifendrucküberwachung einzusetzen, um einen Druckverlust sicher zu detektieren.

Derartige Systeme sind aus US2002/126005 A1, EP4088952 A1, US2021/181063 A1 und US2002/044050 A1 bekannt.

Eine Möglichkeit, eine Reifendrucküberwachung bei Fahrzeugen zu applizieren, besteht darin, die Fahrzeugreifen mit Reifenmodulen auszurüsten.

Dabei besteht ein Problem darin, die Messdaten vom Reifenmodul auf einfache Weise einem Flottenbetreiber zur Verfügung zu stellen.

Der Erfindung lag die Aufgabe zugrunde, ein Verfahren bereitzustellen, mit dem auf einfache Weise Daten von einem Reifenmodul an eine externe Datenbank übertragen werden können.

Gelöst wird die Aufgabe durch ein Verfahren mit den folgenden Schritten:
a) Bereitstellen eines Fahrzeuges mit mindestens einem Fahrzeugreifen mit einem Reifenmodul,
   wobei das Reifenmodul einen Drucksensor zum Erfassen eines Reifendruckes und eine Sendeeinheit zum Übertragen von Daten umfasst,
   wobei die Sendeeinheit bei der Übertragung ein lizenzfreies Frequenzband in einem Ultraschmalband-Bereich nutzt,
b) Aktivierung der Sendeeinheit vom Reifenmodul,
   wenn das Fahrzeug nach einer vorgegebenen Fahrtzeit an einer Übertragungsstation für eine vorgegebene Parkzeit stoppt,
c) Übertragung der Daten vom Reifenmodul zu einer außerhalb des Fahrzeuges angeordneten externen Empfangseinheit,
   die im Bereich der Übertragungsstation angeordnet ist,
   wobei die Übertragung mit dem Frequenzband im Ultraschmalband-Bereich erfolgt,
d) Weiterleiten der Daten zu einem Softwaresystem im Internet.

Ein Vorteil der Erfindung ist darin zu sehen, dass die Datenübertragung zu einer externen Datenbank auf einfache Weise und kostengünstig erfolgen kann. Die Übertragung mit einem Frequenzband in einem Ultraschmalbandbereich hat den Vorteil, dass dieses Frequenzband lizenzfrei genutzt werden kann. Um eine sichere Datenübertragung zu gewährleisten, muss an bestimmten Übertragungsstationen eine externe Empfangseinheit stationiert werden. Dadurch wird eine bessere Netzabdeckung für die Übertragung im Ultraschmalbandbereich erreicht. Wenn das Fahrzeug nach einer längeren Fahrtzeit für eine vorgegebene Zeit an einer Übertragungsstation parkt, wird die Sendeeinheit am Reifenmodul aktiviert. Es erfolgt dann eine Datenübertragung zur externen Empfangseinheit, die die Daten an eine externe Datenbank weiterleitet.

In einer vorteilhaften Weiterbildung der Erfindung ist vorgesehen, dass die Übertragung mit einem Frequenzband im Ultraschmalband-Bereich von 862 MHz bis 928 MHz erfolgt.

Dieser Ultraschmalbandbereich kann im Normalfall lizenzfrei genutzt werden.

In einer weiteren vorteilhaften Weiterbildung der Erfindung ist vorgesehen, dass die Aktivierung der Sendeeinheit vom Reifenmodul dann erfolgt,
wenn das Fahrzeug nach einer vorgegebenen Fahrtzeit von mindestens 30 Minuten für eine vorgegebene Parkzeit von mindestens 5 Minuten stoppt.

Mit diesem Algorithmus lässt sich mit hoher Wahrscheinlichkeit feststellen, dass sich das Fahrzeug im Bereich einer Übertragungsstation mit einer externen Empfangseinheit befindet.

In einer weiteren vorteilhaften Weiterbildung der Erfindung ist vorgesehen, dass die Übertragungsstation an einer Tankstelle, einem Autohof, einem Autobahn-Rasthof, einer Busstation oder einer Ladestation für Elektrofahrzeuge angeordnet ist.

Dadurch wird eine optimale Netzabdeckung für den Ultraschmalbandbereich erreicht.

In einer weiteren vorteilhaften Weiterbildung der Erfindung ist vorgesehen, dass die Externe Empfangseinheit in der Nähe eines Kassensystems angeordnet ist. Im Bereich des Kassensystems, z.B. von einer Tankstelle, befinden sich im Normalfall bereits eine Vielzahl unterschiedlicher elektrischer Geräte. Dadurch ist für die externe Empfangseinheit im Normalfall kein gesondertes Sicherheitszertifikat erforderlich.

In einer weiteren vorteilhaften Weiterbildung der Erfindung ist vorgesehen, dass die übertragen Daten von den Reifenmodulen mit einer Datenbank im Internet gespeichert und weiterverarbeitet werden.

Dadurch kann die Auswertung der Daten dezentral erfolgen.

In einer weiteren vorteilhaften Weiterbildung der Erfindung ist vorgesehen, dass die Informationen der Datenbank einem Flottenbetreiber bereitgestellt werden, wobei der Flottenbetreiber die Informationen zur Wartung der Fahrzeugreifen nutzt.

Der Flottenbetreiber erhält beispielsweise die Information, dass der Reifendruck an einem seiner Fahrzeuge zu gering ist und nachjustiert werden muss.

Anhand eines Ausführungsbeispiels wird die Erfindung im Folgenden näher beschrieben.

Es zeigt:

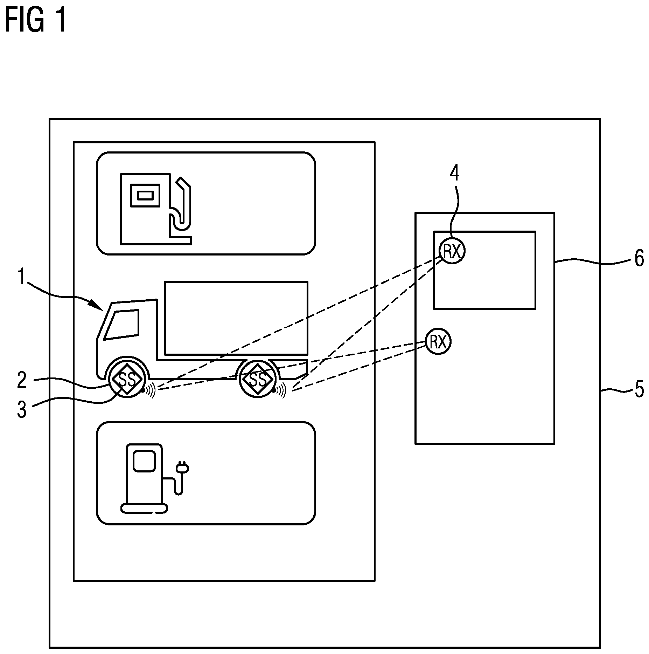

Fig. 1: Ein Nutzfahrzeug in der Seitenansicht.

Die Figur 1 zeigt ein Ausführungsbeispiel. Das Fahrzeug 1 ist z.B. ein Nutzfahrzeug. Das Fahrzeug 1 weist eine Vielzahl von Fahrzeugreifen 2 auf, die jeweils mit einem Reifenmodul 3 versehen sind. Die Reifenmodule sind bevorzugt auf der Reifeninnenseite befestigt und dienen u.a. dazu, den Reifendruck der Fahrzeugreifen zu überwachen.

Bei diesem Ausführungsbeispiels ist die Übertragungsstation im Bereich einer Tankstelle angeordnet. Das Fahrzeug 1 hält an der Tankstelle 5 nachdem es mindestens 30 Minuten auf einer Straße bewegt wurde. Ein Mikrocomputer im Reifenmodul 3 registriert ebenfalls, dass das Fahrzeug für mindestens fünf Minuten gestoppt wurde. Anschließend wird die Sendeeinheit im Reifenmodul 3 aktiviert und die Daten vom Reifenmodul mit einem lizenzfreien Frequenzband in einem Ultraschmalbandbereich gesendet. Die Übertragungsstation, z.B. eine Tankstelle 5 mit einem Tankstellengebäude 6, ist mit einer externen Empfangseinheit 4 ausgerüstet. Die externe Empfangseinheit 4 ist beispielsweise im Bereich des Kassensystems von der Tankstelle angeordnet. Alternativ kann die externe Empfangseinheit 4 an der Wand, im Boden oder auf dem Gebäudedach angeordnet sein. Die Energieversorgung der Empfangseinheit 4 kann mit einer Batterie erfolgen oder über eine elektrische Steckdose.

Die Empfangseinheit 4 empfängt die Daten von dem Reifenmodul und sendet sie anschließend an eine externe Datenbank im Internet weiter.

Das dem Mobilfunknetz ähnliche Netz zur Übertragung der Daten zur Empfangseinheit 4 verbindet Remotegeräte im Ultraschmalband-Frequenzbereich aus dem lizenzfreien Bandbereich (ISM-Band).

Die Daten werden von der externen Datenbank weiter verarbeitet und beispielsweise einem Flottenbetreiber zur Verfügung gestellt.

### Bezugszeichenliste

- 1: Fahrzeug
- 2: Fahrzeugreifen
- 3: Reifenmodul (SS)
- 4: Externe Empfangseinheit (Rx)
- 5: Tankstelle
- 6: Tankstellengebäude

## Patentansprüche

1. Verfahren zum Übertragen von Daten von einem Reifenmodul (3) zu einer externen Empfangseinheit mit folgenden Schritten:
a) Bereitstellen eines Fahrzeuges (1) mit mindestens einem Fahrzeugreifen (2) mit einem Reifenmodul (3),
wobei das Reifenmodul (3) einen Drucksensor zum Erfassen eines Reifendruckes und eine Sendeeinheit zum Übertragen von Daten umfasst,
wobei die Sendeeinheit bei der Übertragung ein lizenzfreies Frequenzband in einem Ultraschmalband-Bereich nutzt,
b) Aktivierung der Sendeeinheit vom Reifenmodul (3),
wenn das Fahrzeug nach einer vorgegebenen Fahrtzeit an einer Übertragungsstation für eine vorgegebene Parkzeit stoppt,
c) Übertragung der Daten vom Reifenmodul (3) zu einer außerhalb des Fahrzeuges (1) angeordneten externen Empfangseinheit (4),
die im Bereich der Übertragungsstation angeordnet ist,
wobei die Übertragung mit dem Frequenzband im Ultraschmalband-Bereich erfolgt,
d) Weiterleiten der Daten zu einem Softwaresystem im Internet.

2. Verfahren nach Anspruch 1,
**dadurch gekennzeichnet, dass**
die Übertragung mit einem Frequenzband im Ultraschmalband-Bereich von 862 MHz bis 928 MHz erfolgt.

3. Verfahren nach einem der vorhergehenden Ansprüche,
**dadurch gekennzeichnet, dass**
die Aktivierung der Sendeeinheit vom Reifenmodul (3) dann erfolgt, wenn das Fahrzeug (1) nach einer vorgegebenen Fahrtzeit von mindestens 30 Minuten für eine vorgegebene Parkzeit von mindestens 5 Minuten stoppt.

4. Verfahren nach einem der vorhergehenden Ansprüche,
**dadurch gekennzeichnet, dass**
die Übertragungsstation an einer Tankstelle, einem Autohof, einem Autobahn-Rasthof, einer Busstation oder einer Ladestation für Elektrofahrzeuge angeordnet ist.

5. Verfahren nach einem der vorhergehenden Ansprüche,
**dadurch gekennzeichnet, dass**
die Externe Empfangseinheit (4) in einem Gebäude in der Nähe eines Kassensystems angeordnet ist.

6. Verfahren nach einem der vorhergehenden Ansprüche,
**dadurch gekennzeichnet, dass**
die Externe Empfangseinheit (4) auf einem Gebäudedach angeordnet ist.

7. Verfahren nach einem der vorhergehenden Ansprüche,
**dadurch gekennzeichnet, dass**
mit die Externen Empfangseinheit (4) eine bidirektionale Kommunikationsschnittstelle mit dem Reifenmodul aufweist.

8. Verfahren nach einem der vorhergehenden Ansprüche,
**dadurch gekennzeichnet, dass**
die übertragen Daten von den Reifenmodulen (3) mit einer Datenbank im Internet gespeichert und weiterverarbeitet werden.

9. Verfahren nach einem der vorhergehenden Ansprüche,
**dadurch gekennzeichnet, dass**
die Informationen der Datenbank einem Flottenbetreiber bereitgestellt werden,
wobei der Flottenbetreiber die Informationen zur Wartung der Fahrzeugreifen nutzt.

## Claims

1. Method for transmitting data from a tyre module (3) to an external receiving unit, having the following steps:
a) providing a vehicle (1) having at least one vehicle tyre (2) with a tyre module (3),
wherein the tyre module (3) comprises a pressure sensor for detecting a tyre pressure and a transmitting unit for transmitting data, wherein the transmitting unit uses a licence-free frequency band in an ultra-narrowband range during transmission,
b) activating the transmitting unit of the tyre module (3)
if the vehicle stops at a transmission station for a predefined parking time after a predefined travel time,
c) transmitting the data from the tyre module (3) to an external receiving unit (4) which is located outside the vehicle (1)
and is located in the region of the transmission station,
wherein the transmission takes place with the frequency band in the ultra-narrowband range,
d) forwarding the data to a software system on the Internet.

2. Method according to Claim 1,
**characterized in that**
the transmission takes place with a frequency band in the ultra-narrowband range from 862 **MHz** to 928 MHz.

3. Method according to one of the preceding claims,
**characterized in that**
the transmitting unit of the tyre module (3) is activated
when the vehicle (1) stops for a predefined parking time of at least 5 minutes after a predefined travel time of at least 30 minutes.

4. Method according to one of the preceding claims,
**characterized in that**
the transmission station is located at a petrol station, a service area, a motorway rest area, a bus station or a charging station for electric vehicles.

5. Method according to one of the preceding claims,
**characterized in that**
the external receiving unit (4) is located in a building near a POS system.

6. Method according to one of the preceding claims,
**characterized in that**
the external receiving unit (4) is located on a building roof.

7. Method according to one of the preceding claims,
**characterized in that**
the external receiving unit (4) has a bidirectional communication interface with the tyre module.

8. Method according to one of the preceding claims,
**characterized in that**
the data transmitted by the tyre modules (3) are stored on the Internet using a database and are processed further.

9. Method according to one of the preceding claims,
**characterized in that**
the information in the database is made available to a fleet operator,
wherein the fleet operator uses the information for the maintenance of the vehicle tyres.

## Revendications

1. Procédé de transmission de données d'un module de pneu (3) à une unité de réception externe, comprenant les étapes suivantes :
a) fournir un véhicule (1) comportant au moins un pneu de véhicule (2) équipé d'un module de pneu (3),
le module de pneu (3) comprenant un capteur de pression destiné à détecter une pression de pneu et une unité d'émission destinée à transmettre des données,
l'unité d'émission utilisant une bande de fréquences sans licence dans un domaine à bande ultra-étroite lors de la transmission,
b) activer l'unité d'émission du module de pneu (3),
lorsque le véhicule s'arrête à une station de transmission pendant une durée de stationnement prédéterminée après un temps de conduite prédéterminé,
c) transmettre les données du module de pneu (3) à une unité de réception externe (4) disposée à l'extérieur du véhicule (1),
qui est disposée dans la zone de la station de transmission,
la transmission s'effectuant au moyen de la bande de fréquences située dans le domaine à bande ultra-étroite,
d) transmettre les données à un système logiciel sur Internet.

2. Procédé selon la revendication 1,
**caractérisé en ce que**
la transmission s'effectue au moyen d'une bande de fréquences dans le domaine à bande ultra-étroite de 862 MHz à 928 MHz.

3. Procédé selon l'une des revendications précédentes,
**caractérisé en ce que**
l'activation de l'unité d'émission du module de pneu (3) se produit lorsque le véhicule (1) s'arrête pendant une durée de stationnement prédéterminée d'au moins 5 minutes après un temps de conduite prédéterminé d'au moins 30 minutes.

4. Procédé selon l'une des revendications précédentes,
**caractérisé en ce que**
la station de transmission est située dans une station-service, une aire de repos pour automobiles, une aire de repos d'autoroute, une station de bus ou une station de recharge pour véhicules électriques.

5. Procédé selon l'une des revendications précédentes,
**caractérisé en ce que**
l'unité de réception externe (4) est disposée dans un bâtiment à proximité d'un système de caisse.

6. Procédé selon l'une des revendications précédentes,
**caractérisé en ce que**
l'unité de réception externe (4) est disposée sur un toit de bâtiment.

7. Procédé selon l'une des revendications précédentes,
**caractérisé en ce que**
l'unité de réception externe (4) présente une interface de communication bidirectionnelle avec le module de pneu.

8. Procédé selon l'une des revendications précédentes,
**caractérisé en ce que**
les données transmises par les modules de pneu (3) sont stockées et traitées au moyen d'une base de données sur Internet.

9. Procédé selon l'une des revendications précédentes,
**caractérisé en ce que**
les informations de la base de données sont fournies à un gestionnaire de flotte, le gestionnaire de flotte utilisant les informations pour la maintenance des pneus de véhicule.
